# EUROPEAN PATENT APPLICATION

(11) **EP 4 671 936 A1**
(43) Date of publication of application: **31.12.2025**
(21) Application number: 24759594.5
(22) Date of filing: 08.02.2024
(51) Int. Cl.: G06F 3/0481

(54) **INFORMATION PUBLISHING METHOD, IDENTIFICATION METHOD, ELECTRONIC DEVICE, AND MEDIUM**

(30) Priority: 21.02.2023 CN 202310145814
(71) Applicant: Beijing Zitiao Network Technology Co., Ltd., Beijing 100190 (CN)
(72) Inventor: LIU, Yiran, Beijing 100028 (CN); WU, Yiying, Beijing 100028 (CN); SUN, Hui, Beijing 100028 (CN); HE, Wozhou, Beijing 100028 (CN); YU, Jingya, Beijing 100028 (CN)
(74) Representative: Isarpatent
(86) International application number: PCT/CN2024/076867
(87) International publication number: WO 2024/174917

(57) **Abstract**

Embodiments of the present disclosure provide an information publishing method, an identification method, an electronic device, and a medium. The method comprises: displaying target media content on a display interface; in response to determining that the target media content is the identified media content having a preset effect, displaying a preset template effect control on the display interface, the preset effect being obtained on the basis of identification of audio information and/or image information of the target media content; in response to the preset template effect control on the display interface being triggered, displaying a media content generation interface, the media content generation interface comprising a target template determined on the basis of the preset effect; and in response to a media content generation operation on the media content generation interface, generating media content on the basis of the target template.

## Description

### CROSS-REFERENCE TO RELATED APPLICATIONS

The present application is on the basis of and claims the priority to the Chinese application No. 202310145814.3 filed on February 21, 2023, the disclosure of which is incorporated by reference herein in its entirety.

### TECHNICAL FIELD

Embodiments of the present disclosure relates to computer technologies, and in particular, to an information publishing method, an identification method, an electronic device, and a medium.

### BACKGROUND

Currently, in video applications, videos having a specific type of template, such as sync point videos, often appear. The sync point video refers to a video where a generated picture is matched with a rhythm of music so that the picture is smoothly switched at a rhythm point of the music. A user can, when creating, achieve a desired sync point effect by using a sync point video template.

### SUMMARY

The present disclosure provides an information publishing method, an identification method, an electronic device, and a medium.

In a first aspect, an embodiment of the present disclosure provides an information publishing method, comprising:
presenting target media content in a presentation interface;
in response to determining that the target media content is identified media content having a preset effect, presenting a preset template effect control in the presentation interface, the preset effect being obtained on the basis of audio information and/or image information identification of the target media content;
in response to the preset template effect control in the presentation interface being triggered, displaying a media content generation interface, the media content generation interface comprising a target template determined on the basis of the preset effect; and
in response to a media content generation operation on the media content generation interface, generating media content on the basis of the target template.

In a second aspect, an embodiment of the present disclosure further provides an identification method for media content having a preset effect, comprising:
acquiring audio information and image information of to-be-identified media content;
identifying the audio information and the image information to acquire an identification result; and
on the basis of the identification result, determining whether the to-be-identified media content has a preset effect, so that for the to-be-identified media content, a preset template effect control is presented in a presentation interface.

In a third aspect, an embodiment of the present disclosure further provides an electronic device, comprising:
one or more processing means; and
a storage means for storing one or more programs,
wherein the one or more programs, when executed by the one or more processing means, cause the one or more processing means to implement the method according to the embodiment of the present disclosure.

In a fourth aspect, an embodiment of the present disclosure further provides a storage medium containing computer-executable instructions which, when executed by a computer processor, are used for performing the method according to the embodiment of the present disclosure.

### BRIEF DESCRIPTION OF THE DRAWINGS

The above and other features, advantages, and aspects of embodiments of the present disclosure will become more apparent by combining the accompanying drawings and referring to the following DETAILED DESCRIPTION. Throughout the drawings, the same or similar reference numbers refer to the same or similar elements. It should be understood that the drawings are schematic and that components and elements are not necessarily drawn to scale.
Fig. 1 is a schematic flow diagram of an information publishing method according to an embodiment of the present disclosure;
Fig. 2 is a schematic flow diagram of another information publishing method according to an embodiment of the present disclosure;
Fig. 3 is a implementation method for interface display according to an embodiment of the present disclosure;
Fig. 4 is a schematic flow diagram of an identification method for media content having a preset effect according to an embodiment of the present disclosure;
Fig. 5 is a schematic flow diagram of another identification method for media content having a preset effect according to an embodiment of the present disclosure;
Fig. 6 is a schematic diagram of an implementation of a sync point probability determination method according to an embodiment of the present disclosure;
Fig. 7 is a schematic diagram of an implementation of a video identification method according to an embodiment of the present disclosure;
Fig. 8 is a schematic diagram of an implementation of a sync point template generation method according to an embodiment of the present disclosure;
Fig. 9 is a schematic diagram of an implementation of a sync point according to an embodiment of the present disclosure;
Fig. 10 is a schematic structural diagram of an information publishing apparatus according to an embodiment of the present disclosure;
Fig. 11 is a schematic structural diagram of an identification apparatus for media content having a preset effect according to an embodiment of the present disclosure;
Fig. 12 is a schematic structural diagram of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure may be implemented in various forms and should not be construed as limited to the embodiments set forth herein, which are provided for a more complete and thorough understanding of the present disclosure rather. It should be understood that the drawings and the embodiments of the present disclosure are for exemplary purposes only and are not intended to limit the scope of protection of the present disclosure.

It should be understood that various steps recited in method embodiments of the present disclosure may be performed in a different order, and/or performed in parallel. Moreover, the method embodiments may include additional steps and/or omit performing the illustrated steps. The scope of the present disclosure is not limited in this respect.

The term "comprising" and variations thereof used herein are intended to be open-ended, i.e., "comprising but not limited to". The term "on the basis of" is " at least partially on the basis of". The term "one embodiment" means "at least one embodiment"; the term "another embodiment" means "at least one additional embodiment"; and the term "some embodiments" means "at least some embodiments". Relevant definitions for other terms will be given in the following description.

It should be noted that the notions such as "first" and "second" mentioned in the present disclosure are only used for distinguishing different devices, modules or units, and are not used for limiting the order or interdependence of the functions performed by the devices, modules or units.

It should be noted that the modifications of "a" and "a plurality" mentioned in the present disclosure are intended to be illustrative rather than restrictive, and that those skilled in the art should appreciate that they should be understood as "one or more" unless otherwise explicitly stated in the context.

Names of messages or information exchanged between a plurality of devices in the implementations of the present disclosure are for illustrative purposes only, and are not intended to limit the scope of the messages or information.

It can be understood that, before the technical solutions disclosed in the embodiments of the present disclosure are used, a user should be notified of a type, a usage scope, a usage scenario, etc. of personal information involved in the present disclosure in a proper manner according to related laws and regulations, and authorization from the user is obtained. For example, identification of to-be-identified media content requires agreement of a user who posted the to-be-identified media content, use of content applied in the media content by a target template, such as music and images, requires authorization from a producer.

For example, in response to receiving an active request of a user, a prompt message is sent to the user to explicitly prompt the user that an operation he requests to be performed would require acquisition and use of personal information of the user. Thus, this enables the user to, according to the prompt message, autonomously select whether to provide the personal information to software or hardware such as an electronic device, an application, a server, or a storage medium, which performs operations of the technical solutions of the present disclosure.

As an optional but non-limiting implementation, in response to receiving an active request of a user, a prompt message to the user may be sent, for example, in a manner of a pop-up window, where the prompt message may be presented in a manner of text. In addition, in the pop-up window, a selection control provided for the user to select "Agree" or "Disagree" on providing the personal information to an electronic device can be carried.

It can be understood that the above processes of notification and acquisition of the authorization from the user are only illustrative and not intended to limit the implementation of the present disclosure, and other manners in which the related laws and regulations are satisfied may also be applied to the implementation of the present disclosure.

Currently, in video applications, videos having a specific type of template, such as sync point videos, often appear. The sync point video refers to a video where a generated picture is matched with a rhythm of music so that the picture is smoothly switched at a rhythm point of the music. A user can, when creating, achieve a desired sync point effect by using a sync point video template. However, currently, the sync point video template is generally a template actively created by a template creator, exemplarily, the template creator needs to post a video carrying template information (which needs to be actively edited by the template creator and uploaded together with the video), and when posting, a platform determines the template carried by the video by the template information edited by the user, so that the template can be displayed in a playing interface for use by other users. However, for example, for an already shot video uploaded by a user, even if the video rhythm itself belongs to a sync point video, since the video itself does not carry template information, a related template shooting entry cannot be displayed after the posting.

According to a method provided by the embodiment of the present disclosure, by presenting a preset template effect control in a presentation interface containing media content having a preset effect, by triggering to display a media content generation interface by the control, and by generating media content for posting by a target template comprised in the media content generation interface, the creation manner of the media content is enriched, and the interaction effect is improved.

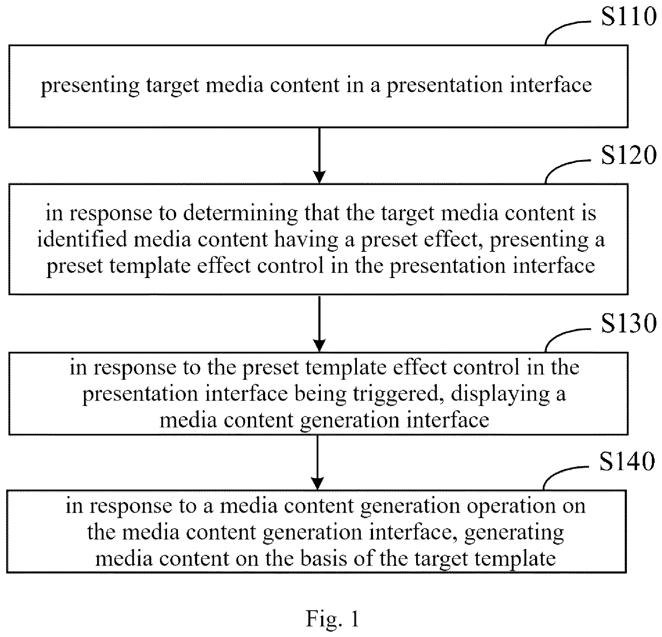

Fig. 1 is a schematic flow diagram of an information publishing method according to an embodiment of the present disclosure. The embodiment of the present disclosure is applicable to a scenario where media content is generated to enrich the creation manner of the media content and improve an interaction effect, the method may be executed by an information publishing apparatus which may be implemented in a form of software and/or hardware, optionally, implemented by an electronic device which may be a device on a terminal side.

As shown in Fig. 1, the method comprises:
S110, presenting target media content in a presentation interface.

In this embodiment, the presentation interface may be understood as an interface for media content presentation and browsing in an application. The target media content may be understood as media content presented in the presentation interface. The media content may be understood as content on the basis of media data. The media data may refer to an important medium for storing and transmitting information, and may include, for example, audio data, video data, image data, data of a combination of any two, or data of a combination of any three.

After the electronic device enters the application, the target media content may be presented in the presentation interface of the application.

S120, in response to determining that the target media content is identified media content having a preset effect, presenting a preset template effect control in the presentation interface.

In this embodiment, the preset effect may be understood as a preset presentation effect; and the preset effect is not specifically limited herein, which may be, for example, an effect associated with presentation of a video sync point. The preset effect may be obtained on the basis of audio information and/or image information identification of the target media content. The audio information may be understood as audio-associated information; and the audio information is not specifically limited herein, which may include, for example, information such as beats, melody, or lyrics of an audio. The image information may be understood as image-associated information; and the image information is not specifically limited herein, which may include, for example, information such as a cut corresponding to an image; and the cut may be understood as visual switching of a picture.

How to obtain the preset effect on the basis of the audio information and/or image information identification of the target media content is not specifically limited herein. For example, on the basis of audio information and/or image information of the target media content, audio sync point-associated information corresponding to the audio information and/or cut-associated information corresponding to the image information are identified by a corresponding audio sync point identification algorithm and cut identification algorithm, and on this basis, it may be identified, on the basis of the identified information, whether the target media content has a preset effect.

In an embodiment, it is possible to identify, by a server device, whether the target media content is media content having a preset effect; and it is also possible to identify, by a terminal side device, whether the target media content is media content having a preset effect. Exemplarily, it is possible to identify, by a server device or a terminal side device, whether the target media content is media content having a preset effect when the target media content is posted, wherein, identification of to-be-identified media content requires agreement of a user posting the to-be-identified media content, and usage of content applied in media content by a target template, such as music and images, requires authorization of a producer.

The preset template effect control may be understood as a preset control for triggering to display the media content generation interface. The electronic device may, in response to determining that the target media content is identified media content having a preset effect, present a preset template effect control in the presentation interface. A presentation position of the preset template effect control in the presentation interface is not specifically limited, which can be flexibly set according to actual requirements.

It can be understood that, when identifying, by the server device, whether the target media content is media content having a preset effect, the server device may send information for indicating whether the target media content is media content having a preset effect, and the electronic device (i.e., the terminal-side device) may, by receiving the information, determine whether the target media content is media content having a preset effect.

S130, in response to the preset template effect control in the presentation interface being triggered, displaying a media content generation interface.

In this embodiment, the media content generation interface may be understood as an interface for generating the media content; and the media content generation interface may comprise a target template determined on the basis of the preset effect. The target template may be understood as a template for generating the media content having the preset effect.

How to determine the target template on the basis of the preset effect is not specifically limited herein; and for example, it is possible to form, on the basis of effect settings of audio, image, video, and other information in the media content in the preset effect, a template for arbitrarily uploading media content according to the effect settings, i.e. a target template.

The electronic device can, in response to the preset template effect control in the presentation interface being triggered, display a media content generation interface. How to display the media content generation interface is not specifically limited herein; and for example, it is possible to display, in the media content generation interface, an interface (e.g. an interface for selecting resources in an album) containing a plurality of to-be-selected resources, or display, in the media content generation interface, an interface (e.g. a shooting interface for acquiring resources by shooting) for acquiring a resource; and on this basis, the displayed media content generation interface can also include indication information for indicating a number of resources required to be selected for the target template and/or a presentation duration of the resources. The resources may be understood as images and/or videos used for generating media content.

S140, in response to a media content generation operation on the media content generation interface, generating media content on the basis of the target template.

In this embodiment, the media content generation operation may be understood as an operation for triggering generating media content. The electronic device may, in response to a media content generation operation on the media content generation interface, generate media content on the basis of the target template.

How to generate media content on the basis of the target template is not specifically limited herein. For example, selected or shot resources (e.g., images and/or videos) may be set according to effect configurations of cuts, transitions, sync points, configured text, and other information of the resources in the target template, to obtain corresponding media content.

The embodiment of the present disclosure provides an information publishing method, in which first, target media content is presented in a presentation interface; then, in response to determining that the target media content is identified media content having a preset effect, a preset template effect control is presented in the presentation interface, the preset effect being obtained on the basis of audio information and/or image information identification of the target media content; then, in response to the preset template effect control in the presentation interface being triggered, a media content generation interface is displayed, the media content generation interface comprising a target template determined on the basis of the preset effect; and finally, in response to a media content generation operation on the media content generation interface, media content is generated on the basis of the target template. With the method, by presenting a preset template effect control in a presentation interface containing media content having a preset effect, triggering to display a media content generation interface by the control, and generating media content for posting by a target template comprised in the media content generation interface, the automatic generation of the media content is realized, the creation manner of the media content is enriched, and the interaction effect is improved.

Optionally, the preset effect comprises one or more of: text information, sync point information, transition information, and visual cut information.

The text information may be understood as information associated with text; and the text information is not specifically limited herein, which may include, for example, text content, text font, text font size, and other information.

The sync point information may be understood as information associated with a sync point; and the sync point information is not specifically limited herein, which may include, for example, information such as a number of segments of the sync point, and a duration of each segment of the sync point. Each segment of the sync point is usable for carrying one selected resource.

The transition information may be understood as information associated with a transition; and the transition information is not specifically limited herein, which may include, for example, a transition interval, a transition category, and other information. The transition may be understood as transition or transformation on display between two resources located within two adjacent sync point segments. The transition interval may be understood as a display range of the transition. The transition category may be understood as an effect display form of the transition.

The visual cut information may be understood as information associated with visual cut information; and the visual cut information is not specifically limited herein, which may include, for example, information such as a position of a visual cut. The visual cut may be understood as visually switching a picture. The visual cut position may be understood as a time position where the picture is switched visually.

Optionally, the target media content comprises one or more of:
a first category of content and a second category of content,
wherein, the first category of content comprises identified content having the preset effect, and the second category of content comprises content posted after the corresponding target template is modified.

In this embodiment, how to modify the target template is not specifically limited herein; and for example, it is possible to modify an audio configured in the target template to another audio, and/or modify a duration of an audio configured in the target template, etc.

In this embodiment, the first category of content may be content having the preset effect that is automatically identified by an algorithm.

In an embodiment, the target media content may further include content having the preset effect that is autonomously created by a user.

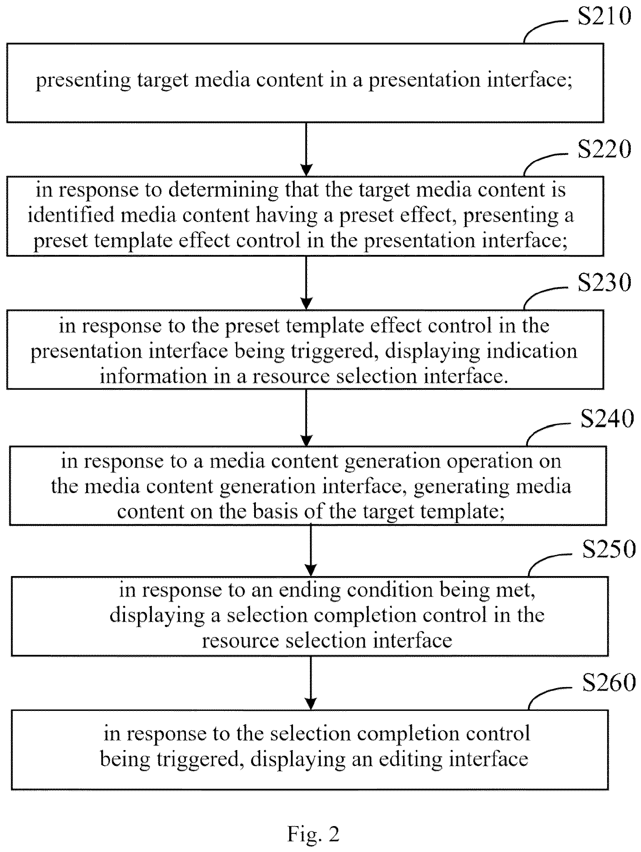

Fig. 2 is a schematic flow diagram of another information publishing method according to an embodiment of the present disclosure, where this embodiment is refinements on the basis of the above embodiments. In this embodiment, the process of displaying a media content generation interface and a process after response to an ending condition being met are specifically described. It should be noted that, for technical details that are not elaborated in this embodiment, reference may be made to any of the embodiments described above. As shown in Fig. 2, the method comprises:
S210, presenting target media content in a presentation interface;
S220, in response to determining that the target media content is identified media content having a preset effect, presenting a preset template effect control in the presentation interface;
S230, in response to the preset template effect control in the presentation interface being triggered, displaying indication information in a resource selection interface.

In this embodiment, a media content generation interface may comprise a resource selection interface. An electronic device may, in response to the preset template effect control in the presentation interface being triggered, display indication information in a resource selection interface.

The resource selection interface may be understood as an interface for resource selection, that is, the resource selection interface can include a plurality of to-be-selected resources for the user to select. The indication information may indicate a number of resources required to be selected for a target template and/or a presentation duration of the resources. The presentation duration may be understood as a duration that the resources are presented.

The number may be determined on the basis of a preset attribute of the preset effect in the identified media content having the preset effect. The preset attribute may be understood as an attribute set in advance; for example, a preset attribute of text information can be considered as a size, font size and other attributes of text; and a preset attribute of sync point information can be considered as attributes such as a segment number of a sync point and a segment duration of the sync point.

The number may include a number of resources required to be selected at least and a number of resources selectable at most. How to determine a number of resources required to be selected on the basis of the preset attribute of the preset effect in the identified media content having the preset effect is not specifically limited herein, for example, it is possible to determine a number of resources required to be selected on the basis of a segment number of a sync point in sync point information, specifically, directly determine the segment number of the sync point as the number, a number of resources required to be selected at least and a number of resources selectable at most being the same; or determine the segment number of the sync point as a number of resources selectable at most, and determine a number determined on the basis of the segment number of the sync point or a preset number as a number of resources required to be selected at least. It can be understood that the number of resources required to be selected at least may be less than or equal to the number of resources selectable at most.

S240, in response to a media content generation operation on the media content generation interface, generating media content on the basis of the target template;
S250, in response to an ending condition being met, displaying a selection completion control in the resource selection interface.

In this embodiment, the ending condition may comprise the number of the selected resources being a second number, or the number of the selected resources being greater than or equal to a first number when a value of the second number is greater than a first set threshold. The selected resources may be understood as resources selected by a user. The first set threshold may be understood as a preset first threshold, and the first set threshold may be flexibly set according to actual requirements. The selection completion control may be understood as a control for triggering to display an editing interface.

The electronic device may, in response to an ending condition is met, display a selection completion control in the resource selection interface.

S260, in response to the selection completion control being triggered, displaying an editing interface.

In this embodiment, the electronic device may, in response to the selection completion control being triggered, display an editing interface. The editing interface may be understood as an interface for editing media content, for example, content such as text or an animation sticker special effect may be added to the media content in the editing interface, which is not limited herein.

An information publishing method provided in the second embodiment of the present disclosure embodies the process of displaying the media content generation interface and the process after the response to the ending condition being met. With the method, the number of resources required to be selected for the target template in the indication information is determined by the preset attribute of the preset effect in the media content, improving flexibility of the determination of the number; and the ending condition is determined on the basis of the first number and/or the second number to trigger to display the selection completion control, improving flexibility of the display of the control, thereby improving richness of the interaction between the interfaces.

Optionally, the preset effect comprises sync point information, and the number being determined on the basis of a preset attribute of the preset effect in the identified media content having the preset effect, comprises: the number being determined on the basis of the number of segments of the sync point in the identified media content having the preset effect.

In this embodiment, the preset effect may comprise sync point information. The number may be determined on the basis of a segment number of a sync point in the identified media content having the preset effect. How to determine the number on the basis of the segment number of the sync point in the identified media content having the preset effect is not specifically limited herein, for example, it is possible to directly determine the segment number of the sync point in the identified media content having the preset effect as the number; or determine the number on the basis of a result of comparison between the segment number of the sync point and a set threshold, specifically, for example, if the segment number of the sync point is less than the set threshold, it may be determined that the number is the segment number of the sync point or a preset number less than the segment number, otherwise, the number may be a number calculated on the basis of the segment number of the sync point, for example, one third of the segment number of the sync point is taken as the number.

Optionally, the number comprises a first number and a second number, the first number being a number determined on the basis of the segment number of the sync point in the identified media content having the preset effect or a set number, the second number being the segment number of the sync point in the identified media content having the preset effect, and the first number being less than the second number.

In this embodiment, the number may comprise a first number and a second number. The first number may be understood as a number determined on the basis of the segment number of the sync point in the identified media content having the preset effect or a set number; and the first number may be considered as the number of resources required to be selected at least. The set number may be understood as a number set in advance, and the set number is not specifically limited herein, which can be flexibly set according to actual requirements.

The second number is the segment number of the sync point of the identified media content having the preset effect; and the second number may be considered as the number of resources selectable at most. The first number may be less than the second number.

In an embodiment, after the resource selection is completed, a resource playing duration of the selected resources and a template playing duration of the target template may be determined first. The resource playing duration may be understood as a total duration of playing of the resources. The template playing duration may be understood as a total duration of playing of the target template. On this basis, the resource playing duration of the selected resources is compared with the template playing duration of the target template.

When the resource playing duration is less than the template playing duration, speed-up information for adjusting a playing speed of the selected resource can be determined on the basis of a difference between the resource playing duration and the template playing duration. How to determine speed-up information on the basis of a difference between the resource playing duration and the template playing duration is not specifically limited herein; and for example, the speed-up information can be obtained according to the difference and a corresponding algorithm, and the speed-up information can indicate that the resource playing duration is slowed down uniformly, until the resource playing duration is the same as the template playing duration.

When the resource playing duration is greater than the template playing duration, the selected resource may be clipped on the basis of the difference between the resource playing duration and the template playing duration. How to clip is not specifically limited herein, for example, the selected resource may be clipped by a resource of which a playing duration is the difference; wherein a clip position is not limited, and can be flexibly set according to actual requirements, for example, a first-segment position, highlight position, last-segment position, or the like of the selected resource.

In an embodiment, a resource reserved after clipping may include a highlight position of the resource. The highlight position can be considered as a position corresponding to a highlight time in a video, for example, a position where a key frame of the video is located.

When the resource playing duration is equal to the template playing duration, the selected resource does not need to be adjusted.

The present disclosure is exemplarily described below.

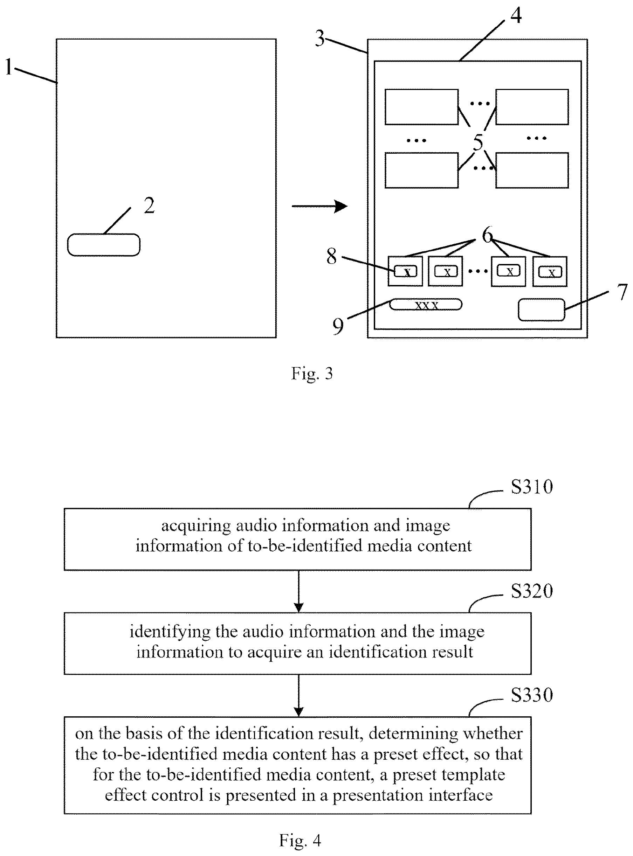

Fig. 3 is an implementation method for interface display according to an embodiment of the present disclosure. As shown in Fig. 3, 1 represents a presentation interface; 2 represents a preset template effect control; 3 represents a media content generation interface; 4 represents a resource selection interface; 5 represents to-be-selected resources; 6 represents second-number positions for uploading resources in a target template; 7 represents a selection completion control; 8 represents a presentation duration of resources in a prompt message; and 9 represents a number of resources required to be selected that is indicated by the prompt message. After determining that target media content in the current presentation interface 1 is media content having a preset effect, an electronic device displays the preset template effect control 2 in the presentation interface 1; in response to triggering the preset template effect control 2, can display the media content generation interface 3, the media content generation interface 3 including the resource selection interface 4, and the resource selection interface 4 having therein displayed the to-be-selected resource 5, the positions 6 for uploading resources, the prompt messages 8 and 9; and in response to an ending condition being met, displays the selection completion control 7 in the resource selection interface 4, and in response to trigger of the selection completion control 7, can display an editing interface.

In the present disclosure, a template shooting entry (i.e. the preset template effect control) is presented in a lower left corner of a sync point video (i.e. the media content having the preset effect) of a consumption page (i.e. the presentation interface), the corresponding media content generation interface is entered by triggering the template shooting entry, and the corresponding media content is generated in the media content generation interface on the basis of the target template, so that the preset effect of the target template is realized, shortening the information publishing path of the media content. The sync point video may be formed by video and video, or by a mix of video and pictures, and the like.

In an embodiment, before displaying the media content generation interface, it may be determined whether there is permission to open an interface (e.g. an interface for a local album of the electronic device) for displaying the to-be-selected resources in the resource selection interface, if there is no permission, an authorization pop-up window needs to be triggered, and the media content generation interface is entered after a user agrees; and if there is the permission, the media content generation interface can been directly entered.

In an embodiment, the resource selection interface can have thereon displayed the positions (a number of which is the same as a number of segments of a sync point of the target template) for uploading resources and the prompt message, wherein each position can correspond to uploading one selected resource. Assuming that the number of resources required to be selected is X, and the segment number of the sync point is Y, X is determined by in various ways, one of which is that X can be a preset value, such as 2, 3 or 4. A second way is that X is determined on the basis of Y, specifically, if Y is less than or equal to a first set threshold (e.g., 2), X can be the same as Y; if Y is greater than the first set threshold, X can be the same as the first set threshold, for example, the user can upload 2 resources; if Y is greater than the first set threshold (e.g., 2) and less than a second set threshold (greater than the first set threshold, e.g., 10), X can be a preset value less than or equal to Y, e.g., the user can upload 2-10 resources; and if Y is greater than or equal to the second set threshold (e.g., 10), then X can be a value determined on the basis of Y, e.g., a calculation formula can be X=Y/3, where X is rounded, e.g., the user can upload 3-10 resources at this time.

In an embodiment, when the number of the uploaded resources reaches X, it may be triggered to display the selection completion control.

Fig. 4 is a schematic flow diagram of an identification method for media content having a preset effect according to an embodiment of the present disclosure. The embodiment of the present disclosure is applicable to a scenario where media content having a preset effect is identified, and the method may be executed by an identification apparatus for media content having a preset effect which may be implemented in a form of software and/or hardware, optionally implemented by an electronic device which may be a device on a terminal side or a device on a server.

As shown in Fig. 4, the method comprises:
S310, acquiring audio information and image information of to-be-identified media content.

In this embodiment, the to-be-identified media content may be understood as media content that is to be identified. The electronic device acquires audio information and image information of the to-be-identified media content. How to acquire audio information and image information of the to-be-identified media content is not specifically limited herein, for example, the audio information and the image information may be acquired by processing the to-be-identified media content through corresponding audio and image information identification algorithms.

S320, identifying the audio information and the image information to acquire an identification result.

In this embodiment, the identification result may be understood as a result obtained by identifying the audio information and the image information. The identification result is not specifically limited herein, which may include, for example, audio sync point information corresponding to the audio information, visual cut information corresponding to the image information in the to-be-identified media content, and text information in the to-be-identified media content. The audio sync point information may be understood as sync point information of an audio.

Optionally, the identification result comprises audio sync point information of the audio information and visual cut information of the to-be-identified media content.

How to identify the audio information and the image information to acquire an identification result is not specifically limited herein. For example, the audio information may be identified by a corresponding track separation algorithm to obtain an identification result corresponding to the audio information, for example, the audio sync point information. And the image information of the to-be-identified media content can be identified by a corresponding cut detection algorithm, to obtain an identification result corresponding to the image information, for example, the visual cut information of the to-be-identified media content.

S330, on the basis of the identification result, determining whether the to-be-identified media content has a preset effect, so that for the to-be-identified media content, a preset template effect control is presented in a presentation interface.

In this embodiment, the electronic device may, on the basis of the identification result, determine whether the to-be-identified media content has a preset effect; if the to-be-identified media content has the preset effect, the preset template effect control can, for the to-be-identified media content, be presented in the presentation interface; and if the to-be-identified media content does not have the preset effect, the preset template effect control is, for the to-be-identified media content, not presented in the presentation interface.

How to determine whether the to-be-identified media content has a preset effect on the basis of the identification result is not specifically limited herein. For example, a matching degree between audio sync points corresponding to the audio sync point information and visual sync points corresponding to the visual cut information can be determined on the basis of the audio sync point information and the visual cut information in the identification result, if the matching degree is higher than a set threshold, it can be indicated that the to-be-identified media content has the preset effect, otherwise, the to-be-identified media content does not have the preset effect. The matching degree may be understood as a proportion of sync points between the audio sync points and the visual sync points that are in matched overlap in a certain range. The visual sync points may be understood as sync points in vision in the media content.

Optionally, the preset effect comprises one or more of: text information, sync point information, transition information, and visual cut information.

The embodiment of the present disclosure provides an identification method for media content having a preset effect, in which first, audio information and image information of to-be-identified media content is acquired; then, the audio information and the image information are identified to acquire an identification result; and finally, it is, on the basis of the identification result, determined whether the to-be-identified media content has a preset effect, so that for the to-be-identified media content, a preset template effect control is presented in a presentation interface. With the method, by identifying the audio information and the image information of the to-be-identified media content to obtain the identification result, to determine, by the identification result, whether the to-be-identified media content has the preset effect, automation and efficiency of the identification of the to-be-identified media content are improved.

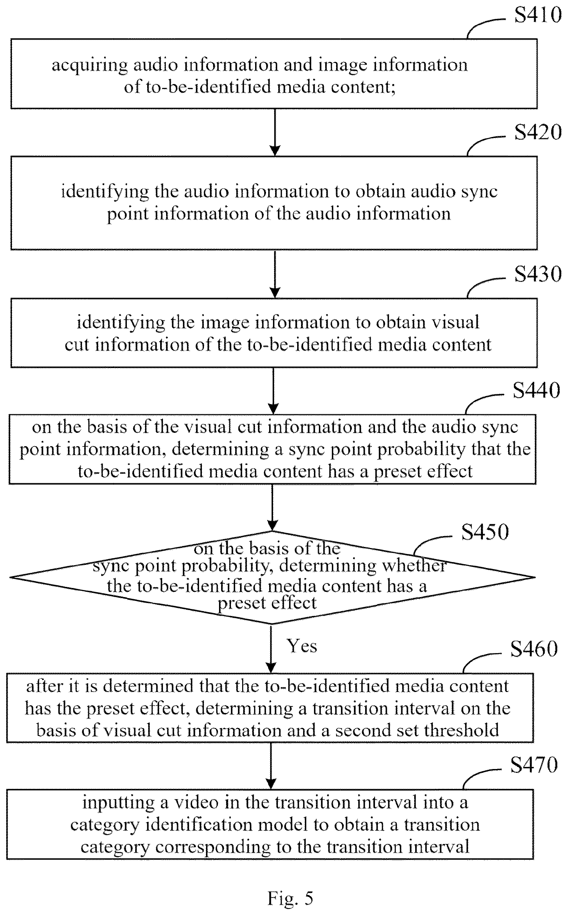

Fig. 5 is a schematic flow diagram of another identification method for media content having a preset effect according to an embodiment of the present disclosure, where this embodiment is refinements on the basis of the above embodiments. In this embodiment, the process of identifying the audio information and the image information to acquire an identification result, the process of, on the basis of the identification result, determining whether the to-be-identified media content has a preset effect, and a process after determining that the to-be-identified media content has the preset effect are specifically described. It should be noted that, for technical details that are not elaborated in this embodiment, reference may be made to any of the embodiments described above. As shown in Fig. 5, the method comprises:
S410, acquiring audio information and image information of to-be-identified media content;
S420, identifying the audio information to obtain audio sync point information of the audio information.

In this embodiment, how to identify the audio information to obtain audio sync point information of the audio information is not specifically limited herein. For example, the audio information may be identified by a set algorithm (e.g., an onset algorithm) for audio sync point identification, to obtain audio sync point information.

S430, identifying the image information to obtain visual cut information of the to-be-identified media content.

In this embodiment, an identification result may be the audio sync point information of the audio information and the visual cut information of the to-be-identified media content.

How to identify the image information to obtain visual cut information of the to-be-identified media content is not specifically limited herein, for example, it is possible to first process a plurality of pieces of image information of the to-be-identified media content by a corresponding algorithm to determine a cut probability corresponding to each piece of image information, wherein, the cut probability may be understood as a cut probability of the corresponding piece of image information; then compare the cut probability of each piece of image information with a preset probability threshold to screen out image information corresponding to a cut probability greater than the preset probability threshold; and finally, determine a time position corresponding to the screened image information as the visual cut information of the to-be-identified media content.

S440, on the basis of the visual cut information and the audio sync point information, determining a sync point probability that the to-be-identified media content has a preset effect.

In this embodiment, the sync point probability may be understood as a probability that characterizes sync points between the visual cut information and the audio sync point information in the to-be-identified media content.

How to determine, on the basis of the visual cut information and the audio sync point information, a sync point probability that the to-be-identified media content has a preset effect is not specifically limited herein; and for example, it is possible to first determine a number of visual sync points corresponding to the visual cut information and a number of audio sync points corresponding to the audio sync point information; then determine points for which point positions of the visual sync point and the audio sync point coincide, wherein, the points for which point positions coincide may be understood as points for which a distance between the point positions of the visual sync point and the audio sync point is within a set range, so that it can be considered that the point positions of the two points approximately coincide; and finally, determine the sync point probability by a corresponding sync point probability algorithm according to the determined points for which point positions coincide, the visual sync points, and the audio sync points.

S450, on the basis of the sync point probability, determining whether the to-be-identified media content has a preset effect; if so, executing S460.

In this embodiment, how to determine, on the basis of the sync point probability, whether the to-be-identified media content has a preset effect is not specifically limited herein; and for example, it is possible to preset a probability threshold for measuring whether it has a preset effect, and compare the sync point probability with the probability threshold, if the sync point probability is greater than the probability threshold, it can be indicated that the to-be-identified media content has the preset effect, and can continue to execute step S460; otherwise, it can be indicated that the to-be-identified media content does not have the preset effect.

S460, after it is determined that the to-be-identified media content has the preset effect, determining a transition interval on the basis of visual cut information and a second set threshold.

In this embodiment, the second set threshold may be understood as a second preset threshold. The transition interval may be understood as a time interval corresponding to a transition.

How to determine a transition interval on the basis of the visual cut information and the second set threshold is not specifically limited herein; and for example, it is possible to first determine a change rate of the cut probabilities of the visual cut information by a corresponding change rate algorithm, wherein the change rate may be understood as a slope between cut probabilities corresponding to two adjacent pieces of image information; then compare the change rate of the cut probabilities with the second set threshold, and select a change rate less than the second set threshold; and finally, for each selected change rate, determine two pieces of image information corresponding to the change rate, to determine a transition interval corresponding to the two pieces of image information on the basis of time positions where the two pieces of image information are located.

S470, inputting a video in the transition interval into a category identification model to obtain a transition category corresponding to the transition interval.

In this embodiment, the category identification model may be understood as a model for identifying a transition category corresponding to the transition interval; and the category identification model is not specifically limited herein, which may be, for example, a temporal shift module (TSM) model. Transition information may comprise the transition interval and the transition category. The transition category may be understood as a category of a display effect of a transition; and the transition category is not specifically limited herein, which may include, for example, dissolve, fade in and fade out, etc. The electronic device inputs a video in the transition interval into a category identification model, and can obtain a transition category corresponding to the transition interval by corresponding model processing.

In an embodiment, before the video in the transition interval is input into the category identification model, the video in the transition interval can also be subjected to temporal difference processing by a temporal difference algorithm; and on this basis, the processed video, as input data, is input to the category identification model for corresponding processing, to obtain the transition category corresponding to the transition interval.

The embodiment of the present disclosure embodies the process of identifying the audio information and the image information to acquire an identification result, the process of, on the basis of the identification result, determining whether to-be-identified media content has a preset effect, and the process after determining that the to-be-identified media content has the preset effect. With the method, by respectively identifying audio information and image information, audio sync point information and visual cut information can be obtained to determine a sync point probability, and by the sync point probability, it is identified whether the to-be-identified media content has a preset effect, effectively identifying whether the to-be-identified media content has a preset effect. And by determining a transition interval and a transition category after determining that the to-be-identified media content has the preset effect, the content of the preset effect corresponding to the to-be-identified media content is enriched, and the creation manner of the media content is enriched.

Optionally, the identifying the image information to obtain visual cut information of the to-be-identified media content, comprises:
inputting the image information into a cut identification model to obtain cut probabilities of the image information;
comparing the cut probability of each piece of image information with a set probability value, and selecting a cut probability from the cut probabilities on the basis of the comparison result; and
determining the visual cut information of the to-be-identified media content on the basis of image information corresponding to the selected cut probability.

In this embodiment, the cut identification model may be understood as a model for identifying the cut probabilities of the image information; and the cut identification model is not specifically limited herein, which may be, for example, a TransNetV2 model, a clipper model, or the like. The set probability value may be understood as a probability set in advance, which is not limited herein and can be flexibly set according to actual requirements. The comparison result may be understood as a result of comparing each cut probability with the set probability value.

In this embodiment, the process of identifying the image information to obtain visual cut information of the to-be-identified media content may be: to first input the image information into a cut identification model for corresponding processing to obtain cut probabilities of the image information; then compare the cut probability of each piece of image information with a set probability value, and select a cut probability from the cut probabilities on the basis of the comparison result; and finally, determine the visual cut information of the to-be-identified media content on the basis of image information corresponding to the selected cut probability.

In this embodiment, how to select a cut probability from the cut probabilities on the basis of the comparison result is not specifically limited; and for example, a cut probability greater than the set probability value in the cut probabilities may be taken as the selected cut probability. Accordingly, in this embodiment, how to determine the visual cut information of the to-be-identified media content on the basis of image information corresponding to the selected cut probability is not specifically limited, for example, a time position where the image information corresponding to the selected cut probability is located may be determined as a cut position corresponding to the image information, and the determined cut position may be considered as the visual cut information of the to-be-identified media content.

Optionally, the determining a transition interval on the basis of visual cut information and a second set threshold, comprises:
determining a change rate of cut probabilities of the visual cut information;
selecting candidate transition positions from the visual cut information on the basis of the change rate and the second set threshold; and
determining the transition interval on the basis of the candidate transition positions.

In this embodiment, the candidate transition position may be understood as a candidate time position for determining the transition interval.

How to determine a change rate of the cut probabilities of the visual cut information is not specifically limited herein, for example, a slope between cut probabilities corresponding to two adjacent pieces of image information may be determined as the change rate of the cut probabilities. Accordingly, how to select candidate transition positions from the visual cut information on the basis of the change rate and the second set threshold is not specifically limited herein; and for example, it is possible to first compare the change rate with the second set threshold, and select a change rate less than the second set threshold from the change rates; and then, for each selected change rate, determine time positions of two pieces of image information corresponding to the change rate as candidate transition positions.

On this basis, how to determine the transition interval on the basis of the candidate transition positions is not specifically limited herein; and for example, for each selected change rate, it is possible to determine an interval between two candidate transition positions corresponding to the change rate as the transition interval; or, by taking a candidate transition position with the former time position as a reference, select a time position within a certain time range before the candidate transition position as a left endpoint of the transition interval, and accordingly, by taking a candidate transition position with the latter time position as a reference, select a time position within a certain time range after the candidate transition position as a right endpoint of the transition interval, and therefore, determine the transition interval corresponding to the change rate on the basis of the left endpoint and the right endpoint.

In an embodiment, two adjacent transition intervals between which a distance is less than a set distance threshold may be merged into one transition interval. A transition interval with a size less than the set interval threshold can be filtered out.

Optionally, the on the basis of the visual cut information and the audio sync point information, determining a sync point probability that the to-be-identified media content has a preset effect, comprises:
determining a visual sync point number on the basis of the visual cut information;
determining an audio sync point number on the basis of the audio sync point information;
determining a coincidence number on the basis of the visual cut information and the audio sync point information, the coincidence number being a number of points for which distances between positions indicated by the visual cut information and positions indicated by the audio sync point information are less than a first preset value; and
on the basis of the visual sync point number, the audio sync point number, and the coincidence number, determining the sync point probability that the to-be-identified media content has a preset effect.

In this embodiment, the visual sync point number may be understood as a number of visual sync points. The audio sync point number may be understood as a number of audio sync points. How to determine the visual sync point number and the audio sync point number is not specifically limited herein, for example, the audio sync point information and the visual cut information may be identified by corresponding algorithms to obtain the corresponding visual sync point number and audio sync point number.

The coincidence number may be understood as a number of points for which distances between positions indicated by the visual cut information and positions indicated by the audio sync point information are less than a first preset value. The first preset value may be understood as a preset first value for measuring a distance between the point positions, which is not specifically limited herein and may be flexibly set according to actual requirements.

In this embodiment, how to determine a coincidence number on the basis of the visual cut information and the audio sync point information is not specifically limited; and for example, it is possible to, for a visual sync point corresponding to each piece of visual cut information, determine a distance between a position (which can be considered as the time position) of the visual sync point and a position (which can be considered as the time position) of each audio sync point in the audio sync point information; on this basis, it is possible to determine a visual sync point and an audio sync point corresponding to a distance less than the first preset value in the distances as a coincident point, wherein, the coincident point may be understood as the point for which the distance between the position indicated by the visual cut information and the position indicated by the audio sync point information is less than the first preset value; and determine a number of determined coincident points as the coincidence number.

In this embodiment, how to determine, on the basis of the visual sync point number, the audio sync point number, and the coincidence number, the sync point probability that to-be-identified media content has the preset effect is not specifically limited, for example, it is possible to determine a ratio between the coincidence number and the visual sync point number as a matching rate corresponding to the visual sync points, and determine a ratio between the coincidence number and the audio sync point number as a matching rate corresponding to the audio sync points; and on this basis, it is possible to determine the sync point probability on the basis of the two determined matching rates, for example, the sync point probability may be an average of the two matching rates, or a weighted average of the two matching rates, etc.

Optionally, the on the basis of the visual sync point number, the audio sync point number, and the coincidence number, determining a sync point probability that the to-be-identified media content has a preset effect, comprises:
determining a sync point matching rate, the sync point matching rate being a ratio of the coincidence number to the visual sync point number;
selecting, from the audio sync point positions, audio sync point positions for which an audio amplitude is a set amplitude;
determining a percentage of positions of which distances from the positions indicated by the visual sync point information are less than a second preset value, in the positions indicated by the selected audio sync point information, as a sync point hit rate for the set amplitude;
determining sync point hit rates corresponding to each audio amplitude in the audio amplitudes corresponding to each piece of audio sync point information, and determining an average of the sync point hit rates corresponding to each audio amplitude as an average sync point hit rate; and
determining the sync point probability on the basis of the sync point matching rate, the sync point hit rate for the set amplitude, and the average sync point hit rate.

In this embodiment, the sync point matching rate may be understood as a probability that characterizes matching between the visual sync points and the coincident points. In this embodiment, a ratio between the coincidence number and the visual sync point number may be determined as the sync point matching rate.

The set amplitude may be understood as an amplitude value set in advance. The audio amplitude may be understood as an amplitude corresponding to the audio sync point. The audio sync point position may be understood as a position (i.e., the time position) where the audio sync point is located. In this embodiment, the audio amplitudes of the audio sync points corresponding to the audio sync point positions can be determined, and on this basis, audio sync point positions for which the audio amplitude is the set amplitude can be selected from the audio sync point positions.

The second preset value may be understood as a preset second value for measuring a distance between the point positions, which is not specifically limited herein and may be flexibly set according to actual requirements. The percentage may be understood as a proportion of positions indicated by the audio sync point information, of which distances from the positions indicated by the visual cut information are less than the second preset value, in the positions indicated by the selected audio sync point information. The sync point hit rate may be understood as a probability value characterizing coincidence of position hits of the audio sync points and the video sync points. In this embodiment, the percentage of the positions, of which distances from the positions indicated by the visual cut information is less than the second preset value, in the positions indicated by the selected audio sync point information, may be determined as the sync point hit rate for the set amplitude. On this basis, with the above sync point hit rate method, sync point hit rates corresponding to each audio amplitude in the audio amplitudes corresponding to each piece of audio sync point information can be determined, and an average of the sync point hit rates corresponding to each audio amplitude can be determined as an average sync point hit rate.

In this embodiment, how to determine the sync point probability on the basis of the sync point matching rate, the sync point hit rate for the set amplitude, and the average sync point rate is not specifically limited, for example, a sum of the sync point matching rate, the sync point hit rate for the set amplitude, and the average sync point rate may be determined as the sync point probability; or a weighted sum of the sync point matching rate, the sync point hit rate for the set amplitude, and the average sync point rate may be determined as the sync point probability, or the like.

The present disclosure is exemplarily described below.

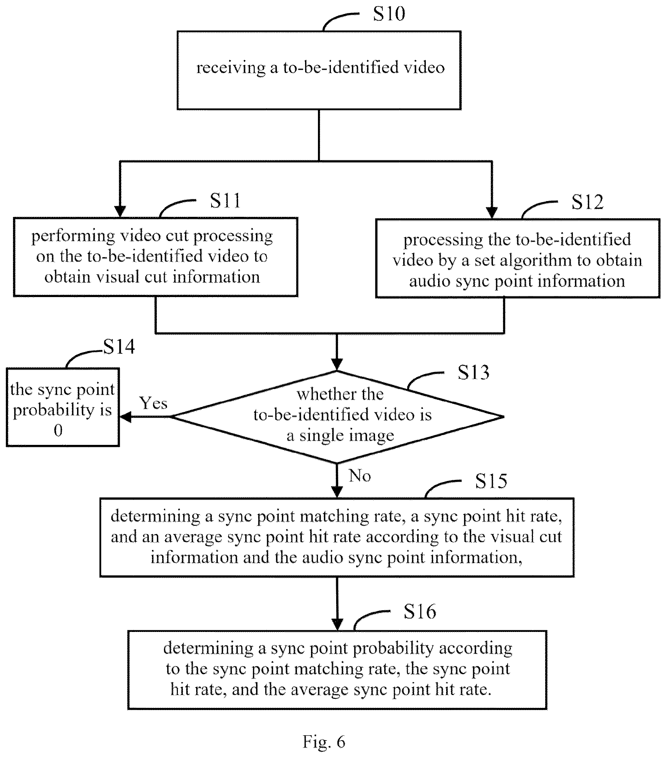

Fig. 6 is a schematic diagram of an implementation of a sync point probability determination method according to an embodiment of the present disclosure. As shown in Fig. 6, the implementation process of the method is as follows:
S10, receiving a to-be-identified video,
wherein the to-be-identified video may be considered as to-be-identified media content;
S11, performing video cut processing on the to-be-identified video to obtain visual cut information;
S12, processing the to-be-identified video by a set algorithm to obtain audio sync point information;
wherein the setting algorithm may be a beat tracking algorithm, an Onset algorithm, or the like;
S13, determining whether the to-be-identified video is a single image, if so, executing S14, otherwise, executing S15;
wherein the single image may be understood as the to-be-identified video being formed in a form of the single image.
S 14, determining that the sync point probability is 0;
wherein, the sync point probability of 0 may indicate that the corresponding to-be-identified video is a video that does not have a preset effect.
S15, determining a sync point matching rate, a sync point hit rate, and an average sync point hit rate according to the visual cut information and the audio sync point information;
wherein, for a specific determination method, reference may be made to the above embodiments, which will not be repeated herein;
S16, determining a sync point probability according to the sync point matching rate, the sync point hit rate, and the average sync point hit rate.

For a specific determination method, reference may be made to the above embodiments, which will not be repeated herein.

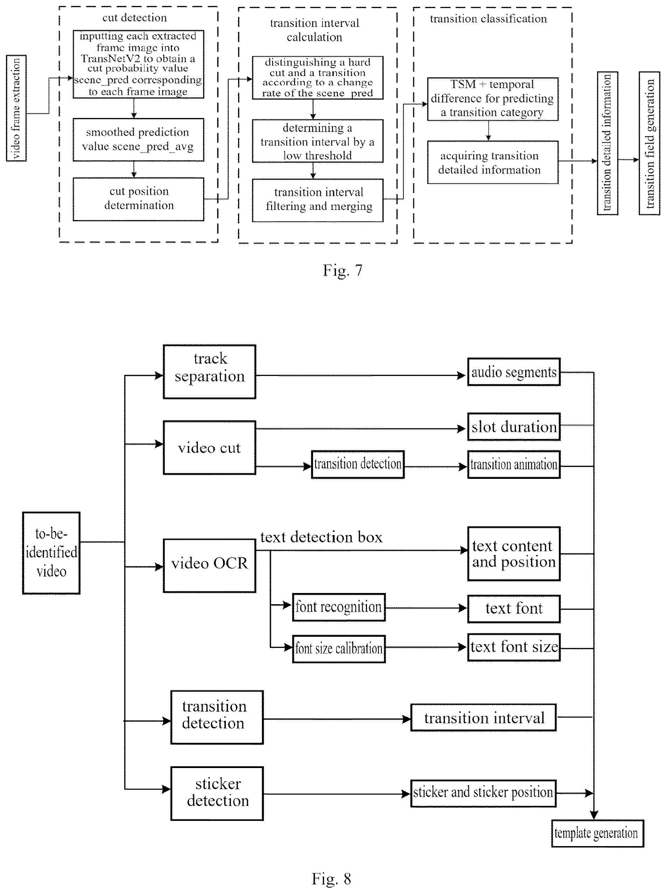

Fig. 7 is a schematic diagram illustrating an implementation of a video identification method according to an embodiment of the present disclosure. As shown in Fig. 7, the implementation process of the method comprises:
video frame extraction: performing frame extraction processing on a to-be-identified video to obtain each frame image (i.e. image information) of the to-be-identified video;
cut detection: inputting each extracted frame image into TransNetV2 to obtain a cut probability value scene_pred (i.e. cut probability) corresponding to each frame image; a smoothed prediction value scene_pred_avg being a value preset according to manual experience; cut position determination (i.e. determination of visual cut information): selecting a cut probability value greater than the smoothed prediction value, and determining a time position of each frame image corresponding to the selected cut probability value as a corresponding cut position.
transition interval calculation: 1) distinguishing a hard cut and a transition according to a change rate of the scene_pred: distinguishing a hard cut and a transition according to a change rate (i.e. a change rate of cut probabilities of the visual cut information) of the cut positions, wherein the change rate is equivalent to a slope between two adjacent cut positions; 2) determining a transition interval by a low threshold (i.e. a second set threshold): if a slope is greater than the low threshold, a corresponding interval attribute being the hard cut, which may be understood as that superimposition of any special effect is not applicable when two frame images are combined, simply switching one frame image to another; and if a slope is less than the low threshold, a corresponding interval attribute being the transition (i.e. a transition interval), wherein the low threshold is preset; and time positions of two frame images corresponding to the transition can be considered as candidate transition positions, and the transition interval can be determined on the basis of the candidate transition positions; 3) and transition interval filtering and merging: if the transition intervals are adjacent, merging the intervals, and if the transition interval is too small, filtering out the interval;
transition classification: 1) TSM + temporal difference for predicting a transition category: performing temporal difference processing on the frame images corresponding to the transition interval, and inputting the processed frame images corresponding to the transition interval, which are used as input data, into the TSM model, to obtain a transition category corresponding to the transition interval; and 2) acquiring transition detailed information: determining transition detailed information corresponding to the transition category according to the determined transition category and a preset mapping relation between a transition category and transition detailed information, wherein the transition detailed information may be understood as information associated with the transition category, which is not limited herein; and
transition field generation: identifying each frame image of the to-be-identified video by a corresponding algorithm to obtain information (i.e. text information) such as a transition field.

Fig. 8 is an implementation schematic diagram of a sync point template generation method according to an embodiment of the present disclosure. As shown in Fig. 8, the implementation process of the method comprises: for a to-be-identified video, performing track separation processing on the to-be-identified video to obtain audio segments (i.e. audio sync point information). Video cut processing is performed on the to-be-identified video to obtain a slot duration (i.e. a presentation duration of resources, wherein a slot may be understood as a position corresponding to a sync point segment), and transition detection is performed to obtain transition animation (including a transition category). Optical character recognition (OCR) is performed on the to-be-identified video, whereby text content and position (i.e. text information) in a text detection box can be obtained, and a text font and text font size (i.e. text information) can also be obtained by font recognition and font size calibration processing methods in the OCR. Transition detection processing is performed on the to-be-identified video, whereby information such as a transition interval of the to-be-identified video can be obtained. Sticker detection processing is performed on the to-be-identified video, whereby information such as a sticker and sticker position of the to-be-identified video can be obtained, wherein the sticker may be considered as a setting for a video special effect.

On this basis, a new template can be obtained on the basis of the information such as the audio segment, the slot duration, the transition animation, the text content, the text position, the text font size, the transition interval, and the sticker, which is obtained on the basis of the identification processing on the to-be-identified video, i.e., a sync point template is generated.

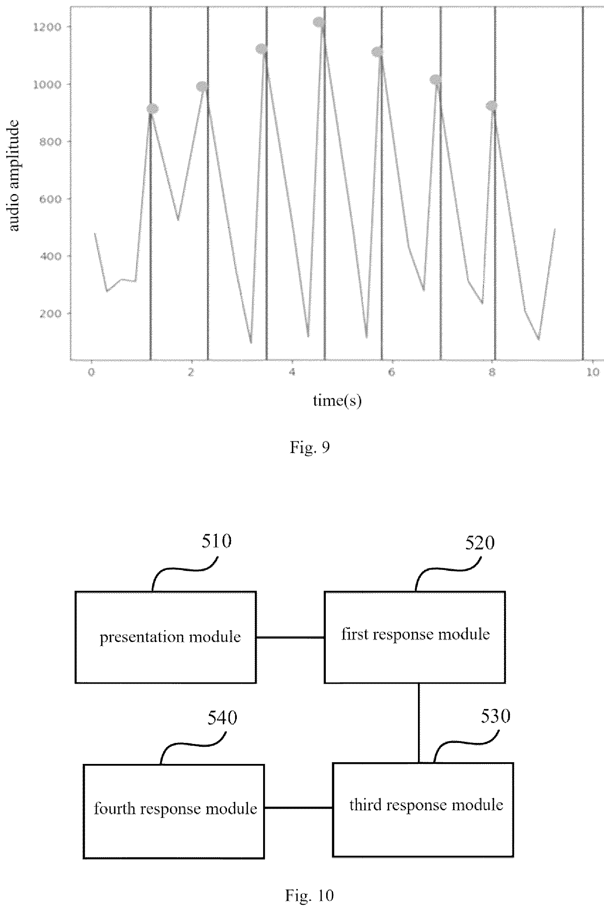

Fig. 9 is a schematic diagram of an implementation of a sync point according to an embodiment of the present disclosure. As shown in Fig. 9, a vertical ordinate may represent an audio amplitude (i.e., energy); an abscissa (time) may represent a time (i.e., a time position); a broken line can represent a broken line formed by an audio of a to-be-identified video, wherein an inflection point of the broken line can be considered as a rhythm point of a music sync point; a vertical straight line represents a straight line where a video sync point is located; and a dot represent a point (i.e., a coincident point between sync points) where the curve and the straight line coincide.

Fig. 10 is a schematic structural diagram of an information publishing apparatus according to an embodiment of the present disclosure, as shown in Fig. 10, the apparatus comprising: a presentation module 510, a first response module 520, a third response module 530, and a fourth response module 540,
wherein, the presentation module 510 is configured to present target media content in a presentation interface;
the first response module 520 is configured to, in response to determining that the target media content is identified media content having a preset effect, present a preset template effect control in the presentation interface, the preset effect being obtained on the basis of audio information and/or image information identification of the target media content;
the third response module 530 is configured to, in response to a preset template effect control in the presentation interface being triggered, display a media content generation interface, the media content generation interface comprising a target template determined on the basis of the preset effect; and
the fourth response module 540 is configured to, in response to a media content generation operation on the media content generation interface, generate media content on the basis of the target template.

According to the technical solution provided by the embodiment of the present disclosure, first, by a presentation module, target media content is presented in a presentation interface; then, by a first response module, in response to determining that the target media content is identified media content having a preset effect, a preset template effect control is presented in the presentation interface, the preset effect being obtained on the basis of audio information and/or image information identification of the target media content; then, by a third response module, in response to a preset template effect control in the presentation interface being triggered, a media content generation interface is displayed, the media content generation interface comprising a target template determined on the basis of the preset effect; and finally, by a fourth response module, in response to a media content generation operation on the media content generation interface, media content is generated on the basis of the target template. With the apparatus, by presenting the preset template effect control in the presentation interface containing the media content having the preset effect, triggering to display the media content generation interface by the control, and generating the media content for posting by the target template comprised in the media content generation interface, the automatic generation of the media content is realized, enriching the creation manner of the media content, and improving the interaction effect.

Optionally, the media content generation interface comprises a resource selection interface, and the third response module 530 comprises:
a display unit configured to display indication information in the resource selection interface, the indication information indicating a number of resources required to be selected for the target template and/or a presentation duration of the resources, and the number being determined on the basis of a preset attribute of the preset effect in the identified media content having the preset effect.

Optionally, the preset effect comprises sync point information, and the number being determined on the basis of a preset attribute of the preset effect in the identified media content having the preset effect, comprises: the number being determined on the basis of a segment number of a sync point in the identified media content having the preset effect.

Optionally, the number comprises a first number and a second number, the first number being a number determined on the basis of the segment number of the sync point in the identified media content having the preset effect or a set number, the second number being the segment number of the sync point in the identified media content having the preset effect, and the first number being less than the second number.

Optionally, the apparatus further comprises:
a first response unit configured to, in response to an ending condition being met, display a selection completion control in the resource selection interface; and
a second response unit configured to, in response to the selection completion control being triggered, display an editing interface,
wherein, the ending condition comprises, the number of the selected resources being the second number, or the number of the selected resources being greater than or equal to a first number when a value of the second number is greater than a first set threshold.

Optionally, the target media content comprises one or more of:
a first category of content and a second category of content,
wherein, the first category of content comprises the identified content having the preset effect, and the second category of content comprises content posted after the corresponding target template is modified.

The information publishing apparatus provided by the embodiment of the present disclosure can execute the information publishing method provided by any embodiment of the present disclosure, with corresponding functional modules for executing the method and beneficial effects.

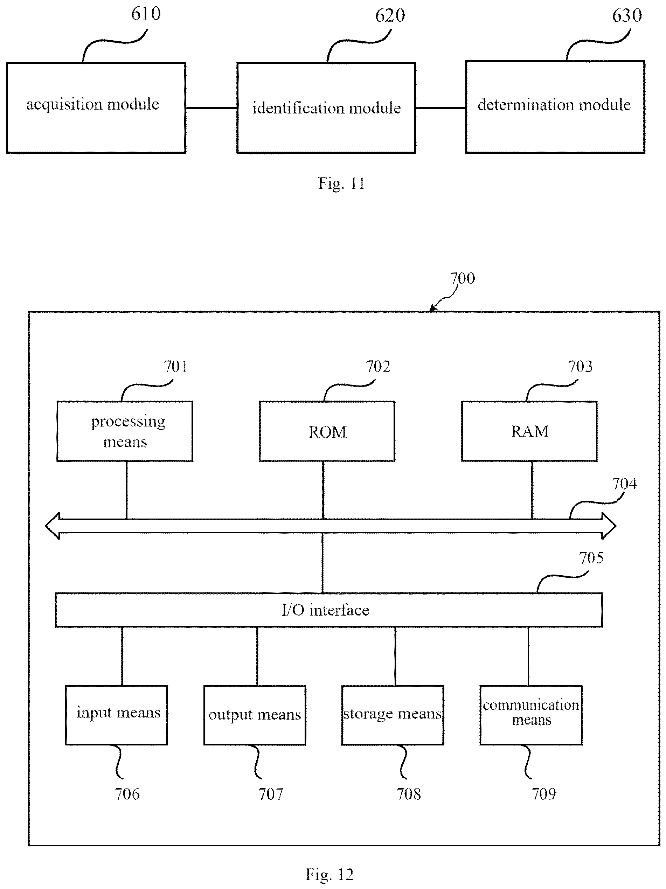

Fig. 11 is a schematic structural diagram of an identification apparatus for media content having a preset effect according to an embodiment of the present disclosure, as shown in Fig. 11, the apparatus comprising: an acquisition module 610, an identification module 620, and a determination module 630,
wherein, the acquisition module 610 is configured to acquire audio information and image information of to-be-identified media content;
the identification module 620 is configured to identify the audio information and the image information to obtain an identification result;
the determination module 630 is configured to, on the basis of the identification result, determine whether the to-be-identified media content has a preset effect, so that for the to-be-identified media content, a preset template effect control is presented in a presentation interface.

In this embodiment, first, by an acquisition module, audio information and image information of to-be-identified media content are acquired; then, by an identification module, the audio information and the image information are identified to acquire an identification result; and finally, by a determination module, it is determined, on the basis of the identification result, whether the to-be-identified media content has a preset effect, so that for the to-be-identified media content, a preset template effect control is presented in a presentation interface. With the apparatus, by identifying the audio information and the image information of the to-be-identified media content to obtain the identification result, so as to determine whether the to-be-identified media content has the preset effect by the identification result, the automation and efficiency of the identification of the to-be-identified media content are improved.

Optionally, the preset effect comprises one or more of: text information, sync point information, transition information, and visual cut information.

Optionally, the identification result comprises audio sync point information of the audio information and visual cut information of the to-be-identified media content.

Optionally, the identification module 620 comprises:
a first identification unit configured to identify the audio information to obtain the audio sync point information of the audio information; and
a second identification unit configured to identify the image information to obtain the visual cut information of the to-be-identified media content.

Optionally, the second identification unit comprises:
an input subunit configured to input the image information to a cut identification model to obtain cut probabilities of the image information;
a selection subunit configured to compare the cut probability of each piece of image information with a set probability value, and select a cut probability from the cut probabilities on the basis of the comparison result; and
an information determination subunit configured to determine the visual cut information of the to-be-identified media content on the basis of image information corresponding to the selected cut probability.

Optionally, the apparatus further comprises:
an interval determination module configured to, after it is determined that the to-be-identified media content has the preset effect, determine a transition interval on the basis of visual cut information and a second set threshold; and
a classification determination module configured to input a video in the transition interval into a category identification model to obtain a transition category corresponding to the transition interval,
wherein, the transition information comprises the transition interval and the transition category.

Optionally, the interval determination module comprises:
a change rate determination unit configured to determine a change rate of the cut probabilities of the visual cut information;
a position selection unit configured to select candidate transition positions from the visual cut information on the basis of the change rate and the second set threshold; and
an interval determination unit configured to determine the transition interval on the basis of the candidate transition positions.

Optionally, the determination module 630 comprises:
a probability determination unit configured to, on the basis of the visual cut information and the audio sync point information, determine a sync point probability that the to-be-identified media content has a preset effect; and
an effect identification unit configured to, on the basis of the sync point probability, determine whether the to-be-identified media content has a preset effect.

Optionally, the probability determination unit comprises:
a first number determination subunit configured to determine a visual sync point number on the basis of the visual cut information;
a second number determination subunit configured to determine an audio sync point number on the basis of the audio sync point information;
a third number determination subunit configured to determine a coincidence number on the basis of the visual cut information and the audio sync point information, the coincidence number being a number of points for which distances between positions indicated by the visual cut information and positions indicated by the audio sync point information are less than a first preset value; and
a probability determination subunit configured to, on the basis of the visual sync point number, the audio sync point number, and the coincidence number, determine the sync point probability that the to-be-identified media content has a preset effect.

Optionally, the probability determination subunit is specifically configured to:
determine a sync point matching rate, the sync point matching rate being a ratio of the coincidence number to the visual sync point number;
select, from the audio sync point positions, audio sync point positions for which an audio amplitude is a set amplitude;
determine a percentage of positions of which distances from the positions indicated by the visual cut information are less than a second preset value, in the positions indicated by the selected audio sync point information, as a sync point hit rate for the set amplitude;
determine sync point hit rates corresponding to each audio amplitude in the audio amplitudes corresponding to each piece of audio sync point information, and determining an average of the sync point hit rates corresponding to each audio amplitude as an average sync point hit rate; and
determine the sync point probability on the basis of the sync point matching rate, the sync point hit rate for the set amplitude, and the average sync point hit rate.

The identification apparatus for media content having a preset effect provided by the embodiment of the present disclosure can execute the identification method for media content having a preset effect provided by any embodiment of the present disclosure, with the corresponding functional modules for executing the method and beneficial effects.

It should be noted that, the units and modules included in the above apparatus are merely divided according to functional logic, but are not limited to the above division as long as the corresponding functions can be implemented; in addition, specific names of the functional units are only for ease of distinction from each other, and are not used for limiting the scope of protection of the embodiments of the present disclosure.

Fig. 12 is a schematic structural diagram of an electronic device according to an embodiment of the present disclosure. Referring to Fig. 12 below, it shows a schematic structural diagram of an electronic device 700 suitable for implementing the embodiment of the present disclosure. The electronic device in the embodiment of the present disclosure may include, but is not limited to, a mobile terminal such as a mobile phone, laptop, digital broadcast receiver, PDA (Personal Digital Assistant), PAD (tablet), PMP (Portable Multimedia Player), and vehicle-mounted terminals (e.g., vehicle-mounted navigation terminal), and a fixed terminal such as a digital TV and desk computer. The electronic device shown in Fig. 12 is only an example, and should not bring any limitation to the functions and the scope of use of the embodiment of the present disclosure.

As shown in Fig. 12, the electronic device 700 may include a processing means (e.g., a central processing unit, a graphics processing unit, etc.) 701 that may perform various appropriate actions and processes according to a program stored in a read only memory (ROM) 702 or a program loaded from a storage means 708 into a random access memory (RAM) 703. In the RAM 703, various programs and data required for the operation of the electronic device 700 are also stored. The processing means 701, the ROM 702, and the RAM 703 are connected to each other by a bus 704. An input/output (I/O) interface 705 is also connected to the bus 704.

Generally, the following means may be connected to the I/O interface 705: an input means 706 including, for example, a touch screen, touch pad, keyboard, mouse, camera, microphone, accelerometer, gyroscope, etc.; an output means 707 including, for example, a liquid crystal display (LCD), speaker, vibrator, etc.; the storage means 708 including, for example, a magnetic tape, hard disk, etc.; and a communication means 709. The communication means 709 may allow the electronic device 700 to communicate with other devices, wirelessly or by wire, to exchange data. While Fig. 12 illustrates the electronic device 700 having various means, it should be understood that there is no requirement that all the illustrated means are implemented or provided. More or fewer means may be alternatively implemented or provided.

In particular, according to the embodiments of the present disclosure, the processes described above with reference to the flow diagrams may be implemented as a computer software program. For example, an embodiment of the present disclosure comprises a computer program product comprising a computer program carried on a non-transitory computer-readable medium, the computer program containing program code for performing the method illustrated by the flow diagrams. In such an embodiment, the computer program may be downloaded and installed from a network by the communication means 709, or installed from the storage means 708, or installed from the ROM 702. The computer program, when executed by the processing means 701, performs the above functions defined in the method of the embodiment of the present disclosure.

Names of messages or information exchanged between a plurality of devices in the embodiments of the present disclosure are for illustrative purposes only, and are not intended to limit the scope of the messages or information.

The electronic device provided by the embodiment of the present disclosure has the same invention concepts as the information publishing method or the identification method for media content having a preset effect provided by the above embodiment, wherein for the technical details that are not described in detail in this embodiment, reference can be made to the above embodiment, and this embodiment has the same beneficial effects as the above embodiment.

An embodiment of the present disclosure provides a computer storage medium having thereon stored a computer program which, when executed by a processor, implements the information publishing method or the identification method for media content having a preset effect provided by the above embodiment.

It should be noted that the above computer-readable medium of the present disclosure may be a computer-readable signal medium or a computer-readable storage medium or any combination of the above two. The computer-readable storage medium may be, for example, but is not limited to, an electronic, magnetic, optical, electromagnetic, infrared, or semiconductor system, apparatus, or device, or any combination of the foregoing. More specific examples of the computer-readable storage medium may include, but are not limited to: an electrical connection having one or more wires, a portable computer diskette, a hard disk, a random access memory (RAM), a read only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium containing or storing a program, wherein the program can be used by or in conjunction with an instruction execution system, apparatus, or device. However, in the present disclosure, the computer-readable signal medium may include a data signal propagated in baseband or as part of a carrier wave, in which computer-readable program code is carried. Such a propagated data signal may take a variety of forms, including, but not limited to, an electromagnetic signal, optical signal, or any suitable combination of the forgoing. The computer-readable signal medium may also be any computer-readable medium other than the computer-readable storage medium, wherein the computer-readable signal medium can send, propagate, or transmit a program for use by or in conjunction with an instruction execution system, apparatus, or device. The program code contained on the computer-readable medium may be transmitted using any appropriate medium, including but not limited to: a wire, an optical cable, RF (Radio Frequency), etc., or any suitable combination of the foregoing.

In some embodiments, a client and a server may communicate using any currently known or future developed network protocol, such as HTTP (HyperText Transfer Protocol), and may be interconnected with any form or medium of digital data communication (e.g., a communication network). Examples of the communication network include a local area network ("LAN"), a wide area network ("WAN"), an internet (e.g., the Internet), and a peer-to-peer network (e.g., an ad hoc peer-to-peer network), as well as any currently known or future developed network.

The above computer-readable medium may be contained in the above electronic device; or may exist separately without being assembled into the electronic device.

Optionally, the above computer-readable medium has thereon carried one or more programs which, when executed by the electronic device, cause the electronic device to: present target media content in a presentation interface; in response to determining that the target media content is identified media content having a preset effect, present a preset template effect control in the presentation interface, the preset effect being obtained on the basis of audio information and/or image information identification of the target media content; in response to the preset template effect control in the presentation interface being triggered, display a media content generation interface, the media content generation interface comprising a target template determined on the basis of the preset effect; and in response to a media content generation operation on the media content generation interface, generate media content on the basis of the target template.

Optionally, the above computer-readable medium has thereon carried one or more programs which, when executed by the electronic device, cause the electronic device to: acquire audio information and image information of to-be-identified media content; identify the audio information and the image information to acquire an identification result; and on the basis of the identification result, determine whether the to-be-identified media content has a preset effect, so that for the to-be-identified media content, a preset template effect control is presented in the presentation interface.

Computer program code for performing the operation of the present disclosure may be written in one or more programming languages or a combination thereof, wherein the above programming language includes but is not limited to an object-oriented programming language such as Java, Smalltalk, and C++, and also includes a conventional procedural programming language, such as a "C" language or a similar programming language. The program code may be executed entirely on a user's computer, partly on a user's computer, as a stand-alone software package, partly on a user's computer and partly on a remote computer, or entirely on a remote computer or server. In a scenario where a remote computer is involved, the remote computer may be connected to a user's computer through any category of network, including a local area network (LAN) or a wide area network (WAN), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, program segment, or part of code, which includes one or more executable instructions for implementing a specified logical function. It should also be noted that, in some alternative implementations, functions noted in blocks may occur in a different order from those noted in the drawings. For example, two blocks shown in succession may, in fact, be executed substantially concurrently, or they may sometimes be executed in a reverse order, which depends upon the functions involved. It will also be noted that each block in the block diagrams and/or flow diagrams, and a combination of the blocks in the block diagrams and/or flow diagrams, can be implemented by a special-purpose hardware-based system that performs specified functions or operations, or by a combination of special-purpose hardware and computer instructions.

The involved module or unit described in the embodiment of the present disclosure may be implemented by software or hardware. The name of the module or unit does not, in some cases, constitute a limitation on the unit itself, for example, the first response unit may also be described as "a unit of, in response to the ending condition being met, displaying a selection completion control in the resource selection interface".

The functions described above herein may be executed, at least partially, by one or more hardware logic components. For example, without limitation, a hardware logic component of an exemplary type that may be used includes: a field programmable gate array (FPGA), an application specific integrated circuit (ASIC), an application specific standard product (ASSP), a system on chip (SOC), a complex programmable logic device (CPLD), and the like.

In the context of this disclosure, a machine-readable medium may be a tangible medium, which can contain or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium include an electrical connection based on one or more wires, a portable computer diskette, a hard disk, a random access memory (RAM), a read only memory (ROM), an erasable programmable read only memory (EPROM or flash memory), an optical fiber, a portable compact disc read-only memory (CD-ROM), an optical storage device, a magnetic storage device, or any suitable combination of the foregoing.

According to one or more embodiments of the present disclosure, example 1 provides an information publishing method, comprising:
presenting target media content in a presentation interface;
in response to determining that the target media content is identified media content having a preset effect, presenting a preset template effect control in the presentation interface, the preset effect being obtained on the basis of audio information and/or image information identification of the target media content;
in response to the preset template effect control in the presentation interface being triggered, displaying a media content generation interface, the media content generation interface comprising a target template determined on the basis of the preset effect; and
in response to a media content generation operation on the media content generation interface, generating media content on the basis of the target template.

According to one or more embodiments of the present disclosure, example 2: according to the method of example 1, wherein, the media content generation interface comprises a resource selection interface, the displaying a media content generation interface, comprises:
displaying indication information in the resource selection interface, the indication information indicating a number of resources required to be selected for the target template and/or a presentation duration of the resources, and the number being determined on the basis of a preset attribute of the preset effect in the identified media content having the preset effect.

According to one or more embodiments of the present disclosure, example 3: according to the method of example 2, wherein, the preset effect comprises one or more of: text information, sync point information, transition information, and visual cut information.

According to one or more embodiments of the present disclosure, example 4: according to the method of example 2, wherein, the preset effect comprises sync point information, and the number being determined on the basis of a preset attribute of the preset effect in the identified media content having the preset effect, comprises: the number being determined on the basis of a segment number of a sync point in the identified media content having the preset effect.

According to one or more embodiments of the present disclosure, example 5: according to the method of example 3, wherein, the number comprises a first number and a second number, the first number being the number determined on the basis of a segment number of the sync point in the identified target media content having the preset effect or a set number, the second number being the segment number of the sync point of the identified target media content having the preset effect, and the first number being less than the second number.

According to one or more embodiments of the present disclosure, example 6: according to the method of example 3, further comprising:
in response to an ending condition being met, displaying a selection completion control in the resource selection interface; and
in response to the selection completion control being triggered, displaying an editing interface,
wherein, the first category of content comprises the identified content having the preset effect, and the second category of content comprises content posted after the corresponding target template is modified.

According to one or more embodiments of the present disclosure, example 7: according to the method of example 1, wherein, the target media content comprises one or more of:
a first category of content and a second category of content,
the first category of content comprises identified content having a preset effect, and the second category of content comprises content which is posted after the corresponding target template is modified.

According to one or more embodiments of the present disclosure, example 8 provides an identification method for media content having a preset effect, comprising:
acquiring audio information and image information of to-be-identified media content;
identifying the audio information and the image information to acquire an identification result; and
on the basis of the identification result, determining whether the to-be-identified media content has a preset effect, so that for the to-be-identified media content, a preset template effect control is presented in a presentation interface.

According to one or more embodiments of the present disclosure, example 9: according to the method of example 8, wherein, the preset effect comprises one or more of: text information, sync point information, transition information, and visual cut information.

According to one or more embodiments of the present disclosure, example 10: according to the method of example 8, wherein, the identification result comprises audio sync point information of the audio information and visual cut information of the to-be-identified media content.

According to one or more embodiments of the present disclosure, example 11: according to the method of example 8, wherein, the identifying the audio information and the image information to acquire an identification result, comprises:
identifying the audio information to obtain the audio sync point information of the audio information; and
identifying the image information to obtain the visual cut information of the to-be-identified media content.

According to one or more embodiments of the present disclosure, example 12: according to the method of example 11, wherein, the identifying the image information to obtain the visual cut information of the to-be-identified media content, comprises:
inputting the image information into a cut identification model to obtain cut probabilities of the image information;
comparing the cut probability of each piece of image information with a set probability value, and selecting a cut probability from the cut probabilities on the basis of the comparison result; and
determining the visual cut information of the to-be-identified media content on the basis of image information corresponding to the selected cut probability.

According to one or more embodiments of the present disclosure, example 13: according to the method of example 8, further comprising:
after it is determined that the to-be-identified media content has the preset effect, determining a transition interval on the basis of visual cut information and a second set threshold; and
inputting a video in the transition interval into a category identification model to obtain a transition category corresponding to the transition interval,
wherein, the transition information comprises the transition interval and the transition category.

According to one or more embodiments of the present disclosure, example 14: according to the method of example 3, wherein, the determining a transition interval on the basis of visual cut information and a second set threshold, comprises:
determining a change rate of cut probabilities of the visual cut information;
selecting candidate transition positions from the visual cut information on the basis of the change rate and the second set threshold; and
determining the transition interval on the basis of the candidate transition positions.

According to one or more embodiments of the present disclosure, example 15: according to the method of example 10, wherein, the on the basis of the identification result, determining whether the to-be-identified media content has a preset effect, comprises:
on the basis of the visual cut information and the audio sync point information, determining a sync point probability that the to-be-identified media content has a preset effect; and
on the basis of the sync point probability, determining whether the to-be-identified media content has a preset effect.

According to one or more embodiments of the present disclosure, example 16: according to the method of example 15, wherein, the on the basis of the visual cut information and the audio sync point information, determining a sync point probability that the to-be-identified media content has a preset effect, comprises:
determining a visual sync point number on the basis of the visual cut information;
determining an audio sync point number on the basis of the audio sync point information;
determining a coincidence number on the basis of the visual cut information and the audio sync point information, the coincidence number being a number of points for which distances between positions indicated by the visual cut information and positions indicated by the audio sync point information are less than a first preset value; and
on the basis of the visual sync point number, the audio sync point number, and the coincidence number, determining the sync point probability that the to-be-identified media content has a preset effect.

According to one or more embodiments of the present disclosure, example 17: according to the method of example 16, wherein, the on the basis of the visual sync point number, the audio sync point number, and the coincidence number, determining the sync point probability that the to-be-identified media content has a preset effect, comprises:
determining a sync point matching rate, the sync point matching rate being a ratio of the coincidence number to the visual sync point number;
selecting, from the audio sync point positions, audio sync point positions for which an audio amplitude is a set amplitude;
determining a percentage of positions of which distances from the positions indicated by the visual cut information are less than a second preset value, in the positions indicated by the selected audio sync point information, as a sync point hit rate for the set amplitude;
determining sync point hit rates corresponding to each audio amplitude in the audio amplitudes corresponding to each piece of audio sync point information, and determining an average of the sync point hit rates corresponding to each audio amplitude as an average sync point hit rate; and
determining the sync point probability on the basis of the sync point matching rate, the sync point hit rate for the set amplitude, and the average sync point hit rate.

According to one or more embodiments of the present disclosure, example 18 provides an electronic device, comprising:
one or more processing means;
a storage means for storing one or more programs,
wherein, the one or more programs, when executed by the one or more processing means, cause the one or more processing means to implement the method according to any of examples 1-17.

According to one or more embodiments of the present disclosure, example 19 provides a storage medium containing computer-executable instructions which, when executed by a computer processing means, performing the method according to any of examples 1-17.

The foregoing description is only illustration of the preferred embodiments of the present disclosure and the technical principles employed. It should be appreciated by those skilled in the art that the disclosure scope involved in the present disclosure is not limited to the technical solutions formed by specific combinations of the above technical features, but also encompasses other technical solutions formed by arbitrary combinations of the above technical features or equivalent features thereof without departing from the above disclosed concepts, for example, a technical solution formed by performing mutual replacement between the above features and technical features having similar functions to those disclosed (but not limited to) in the present disclosure.

Furthermore, while operations are depicted in a specific order, this should not be understood as requiring that these operations be performed in the specific order shown or in a sequential order. Under certain circumstances, multitasking and parallel processing may be advantageous. Similarly, while several specific implementation details are included in the above discussion, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or method logical actions, it should be understood that the subject matter defined in the attached claims is not necessarily limited to the specific features or actions described above. Rather, the specific features and actions described above are only example forms of implementing the claims.

## Claims

1. An information publishing method, comprising:
presenting target media content in a presentation interface;
in response to determining that the target media content is identified media content having a preset effect, presenting a preset template effect control in the presentation interface, the preset effect being obtained on the basis of at least one of audio information or image information identification of the target media content;
in response to the preset template effect control in the presentation interface being triggered, displaying a media content generation interface, the media content generation interface comprising a target template determined on the basis of the preset effect; and
in response to a media content generation operation on the media content generation interface, generating media content on the basis of the target template.

2. The method according to claim 1, wherein, the media content generation interface comprises a resource selection interface, and the displaying a media content generation interface, comprises:
displaying indication information in the resource selection interface, the indication information indicating at least one of a number of resources required to be selected for the target template or a presentation duration of the resources, and the number being determined on the basis of a preset attribute of the preset effect in the identified media content having the preset effect.

3. The method according to claim 2, wherein, the preset effect comprises one or more of: text information, sync point information, transition information, and visual cut information.

4. The method according to claim 2, wherein, the preset effect comprises sync point information, and the number being determined on the basis of a preset attribute of the preset effect in the identified media content having the preset effect, comprises: the number being determined on the basis of a segment number of a sync point in the identified media content having the preset effect.

5. The method according to claim 3, wherein, the number comprises a first number and a second number, the first number being the number determined on the basis of a segment number of the sync point in the identified target media content having the preset effect or a set number, the second number being the segment number of the sync point of the identified target media content having the preset effect, and the first number being less than the second number.

6. The method according to claim 3, further comprising:
in response to an ending condition being met, displaying a selection completion control in the resource selection interface; and
in response to the selection completion control being triggered, displaying an editing interface,
wherein, the ending condition comprises the number of the selected resources being a second number, or the number of the selected resources being greater than or equal to a first number when a value of the second number is greater than a first set threshold.

7. The method according to claim 1, wherein, the target media content comprises one or more of:
a first category of content and a second category of content,
wherein, the first category of content comprises the identified content having the preset effect, and the second category of content comprises content posted after the corresponding target template is modified.

8. An identification method for media content having a preset effect, comprising:
acquiring audio information and image information of to-be-identified media content;
identifying the audio information and the image information to acquire an identification result; and
on the basis of the identification result, determining whether the to-be-identified media content has a preset effect, so that for the to-be-identified media content, a preset template effect control is presented in a presentation interface.

9. The method according to claim 8, wherein, the preset effect comprises one or more of: text information, sync point information, transition information, and visual cut information.

10. The method according to claim 8, wherein, the identification result comprises audio sync point information of the audio information and visual cut information of the to-be-identified media content.

11. The method according to claim 8, wherein, the identifying the audio information and the image information to acquire an identification result, comprises:
identifying the audio information to obtain the audio sync point information of the audio information; and
identifying the image information to obtain the visual cut information of the to-be-identified media content.

12. The method according to claim 11, wherein, the identifying the image information to obtain the visual cut information of the to-be-identified media content, comprises:
inputting the image information into a cut identification model to obtain cut probabilities of the image information;
comparing the cut probability of each piece of image information with a set probability value, and selecting a cut probability from the cut probabilities on the basis of a comparison result; and
determining the visual cut information of the to-be-identified media content on the basis of image information corresponding to the selected cut probability.

13. The method according to claim 8, further comprising:
after it is determined that the to-be-identified media content has the preset effect, determining a transition interval on the basis of visual cut information and a second set threshold; and
inputting a video in the transition interval into a category identification model to obtain a transition category corresponding to the transition interval,
wherein, the transition information comprises the transition interval and the transition category.

14. The method according to claim 13, wherein, the determining a transition interval on the basis of visual cut information and a second set threshold, comprises:
determining a change rate of cut probabilities of the visual cut information;
selecting candidate transition positions from the visual cut information on the basis of the change rate and the second set threshold; and
determining the transition interval on the basis of the candidate transition positions.

15. The method according to claim 10, wherein, the on the basis of the identification result, determining whether the to-be-identified media content has a preset effect, comprises:
on the basis of the visual cut information and the audio sync point information, determining a sync point probability that the to-be-identified media content has a preset effect; and
on the basis of the sync point probability, determining whether the to-be-identified media content has a preset effect.

16. The method according to claim 15, wherein, the on the basis of the visual cut information and the audio sync point information, determining a sync point probability that the to-be-identified media content has a preset effect, comprises:
determining a visual sync point number on the basis of the visual cut information;
determining an audio sync point number on the basis of the audio sync point information;
determining a coincidence number on the basis of the visual cut information and the audio sync point information, the coincidence number being a number of points for which distances between positions indicated by the visual cut information and positions indicated by the audio sync point information are less than a first preset value; and
on the basis of the visual sync point number, the audio sync point number, and the coincidence number, determining the sync point probability that the to-be-identified media content has a preset effect.

17. The method according to claim 16, wherein, the on the basis of the visual sync point number, the audio sync point number, and the coincidence number, determining the sync point probability that the to-be-identified media content has a preset effect, comprises:
determining a sync point matching rate, the sync point matching rate being a ratio of the coincidence number to the visual sync point number;
selecting, from the audio sync point positions, audio sync point positions for which an audio amplitude is a set amplitude;
determining a percentage of positions of which distances from the positions indicated by the visual sync point information are less than a second preset value, in the positions indicated by the selected audio sync point information, as a sync point hit rate for the set amplitude;
determining sync point hit rates corresponding to each audio amplitude in the audio amplitudes corresponding to each piece of audio sync point information, and determining an average of the sync point hit rates corresponding to each audio amplitude as an average sync point hit rate; and
determining the sync point probability on the basis of the sync point matching rate, the sync point hit rate for the set amplitude, and the average sync point hit rate.

18. An electronic device, comprising:
one or more processing means;
a storage means for storing one or more programs which,
when executed by the one or more processing means, cause the one or more processing means to perform the method according to any of claims 1-17.

19. A storage medium containing computer-executable instructions which, when executed by a computer processor, perform the method according to any of claims 1-17.

20. An information publishing apparatus, comprising:
a presentation module configured to present target media content in a presentation interface;
a first response module configured to, in response to determining that the target media content is identified media content having a preset effect, present a preset template effect control in the presentation interface, the preset effect being obtained on the basis of at least one of audio information or image information identification of the target media content;
a third response module configured to, in response to the preset template effect control in the presentation interface being triggered, display a media content generation interface, the media content generation interface comprising a target template determined on the basis of the preset effect; and
a fourth response module configured to, in response to a media content generation operation on the media content generation interface, generate media content on the basis of the target template.

21. An identification apparatus for media content having a preset effect, comprising:
an acquisition module configured to acquire audio information and image information of to-be-identified media content;
an identification module configured to identify the audio information and the image information to acquire an identification result; and
a determination module configured to, on the basis of the identification result, determine whether the to-be-identified media content has a preset effect, so that for the to-be-identified media content, a preset template effect control is presented in a presentation interface.
